# EUROPÄISCHE PATENTANMELDUNG

(11) **EP 0 931 765 A2**
(43) Veröffentlichungstag der Anmeldung: **28.07.1999**
(21) Anmeldenummer: 99890012.0
(22) Anmeldetag: 21.01.1999
(51) Int. Cl.: C02F 1/30, C02F 1/78

(54) **Verfahren und Vorrichtung zur Aufbereitung von mit gentoxischen Substanzen belastetem Wasser**

(30) Priorität: 21.01.1998 AT 10298
(71) Anmelder: ÖSTERREICHISCHES FORSCHUNGSZENTRUM SEIBERSDORF GES.M.B.H., 2444 Seibersdorf (AT)
(72) Erfinder: Gehringer, Peter, Dipl.-Ing., Dr., 1030 Wien (AT); Eschweiler, Helmut, 2440 Moosbrunn (AT)
(74) Vertreter: Wildhack, Helmut, Dipl.-Ing. Dr.

(57) **Zusammenfassung**

Die Erfindung betrifft ein Verfahren zur Konversion von zumindest mit einer oder mehreren gentoxischen Substanz(en) belastetem Wasser, bevorzugt Grundwasser, in ein Trinkwasser-Qualität aufweisendes Wasser ("Trinkwasser"), das dadurch gekennzeichnet ist, daß ein Strom eines zumindest mit einer oder mehreren gentoxischen Substanz(en) belasteten Wassers - direkt oder nach Durchlaufen einer vorgeschalteten, für eine qualitätsverbessemde Aufbereitung von Wasser vorgesehenen, an sich bekannten Vorbehandlungs-Stufe - sequentiell und/oder simultan zumindest einer Beaufschlagung mit Ozon in der Gasphase und/oder in mit Ozon angereichertem Wasser ("Starkwasser") und zumindest einer einmaligen Einwirkung schneller Elektronen durch Führen des genannten Wasser-Stroms durch das Strahlungsfeld eines Elektronenbeschleunigers unterworfen wird, eine Vorrichtung zur Durchführung des Verfahrens sowie die Verwendung des neuen Verfahrens und der neuen Vorrichtung für den eingangs genannten Zweck.

## Beschreibung

Die vorliegende Erfindung betrifft ein neues Verfahren zur Konversion von zumindest mit einer oder mehreren gentoxischen Substanz(en) belastetem Wasser, bevorzugt von Grundwasser, in ein Trinkwasser-Qualität aufweisendes Wasser ("Trinkwasser"), eine für die Durchführung des neuen Verfahrens vorgesehene Vorrichtung sowie die Verwendung des neuen Verfahrens und der neuen Vorrichtung.

Infolge eines steigenden Bewußtseins bezüglich der Gefahren, die von gentoxisch wirksamen Substanzen ausgehen, wird auch die Problematik des Gehaltes von für Trinkwasserzwecke vorgesehenen Wässern an diesen -nur durch langwierige und kostspielige Mutagen-Tests hinsichtlich ihrer gentoxischen Wirksamkeit erkenn- und nachweisbaren - Substanzen zunehmend drängender. So ist 1994 in "Mutation Research Letters" 323 (1994) 93 - 98 eine Arbeit erschienen, deren Autoren, C. Helma et al, sich mit einer von ihnen gefundenen Erhöhung der Clastogenität (clastogenicity) bzw. Gentoxizität von kontaminierten Grundwässern nach einer UV-Bestahlung dieser Wässer beschäftigen. Sie zitieren auf Seite 97 des Artikels verschiedene andere Autoren, welche Aktivkohle-Filtration als eine durchaus geeignete Methode für die Entfernung von mutagenen Kontaminanten aus Wässern darstellen. Die Autoren der Arbeit in "Mutation Research Letters" 323 (1994) können sich allerdings einer derartigen positiven Sicht der anderen Autoren nicht anschließen.

So zeigt z.B. die Tabelle 1 des Artikels Resultate bezüglich der Effektivität von Aktivkohle-Filtem bei der Entfernung von gentoxischen Substanzen aus Grundwasser. Aus einigen bestimmten Brunnen einer einem einheitlichen Grundwasserkörper zugeordneten Reihe von Brunnen entnommene Wässer zeigen eindeutig eine signifikante gentoxische Belastung der dort entnommenen Wässer, während eine ebenfalls untersuchte Mischung von aus allen untersuchten Brunnen entnommenen Wässern weniger eindeutige Signifikanz der Resultate zeigt. Allerdings zeigen einzelne Experimente wiederum durchaus Signifikanz von deren Erhöhung gegenüber einem Leerwert.

Die Autoren führen im Kapitel "Ergebnisse und Diskussion" ihrer Arbeit aus, daß nach einer Aktivkohle-Filtration der Mutagen-Effekt in einigen Fällen signifikant höher war als bei einer gentoxisch negativen Vergleichssubstanz. Die Autoren haben an sich nicht näher diskutiert, warum sie nicht für alle Brunnen erhöhte Werte der Gentoxizität nach der Aktivkohle-Filtration gefunden haben. Insgesamt folgt jedoch aus dem Artikel in "Mutation Research Letters" 323 (1994) folgendes zwangsläufig:

Wird ein Aktivkohle-Filter mit einem Wasser beaufschlagt, das eine unbekannte Substanz enthält, die nicht prompt nachgewiesen werden kann oder, anders ausgedrückt, deren Adsorptions-Verhalten und damit auch der Zeitpunkt von deren Durchbruch durch das Aktivkohle-Filter unbekannt sind, kann der im Ablauf zu verschiedenen Zeitpunkten entsprechende Wert (erst ca. einen Monat ab Probenahme liegen wegen des zeitaufwendigen Tests auf Basis eines biologischen Bestimmungsverfahrens die Resultate vor) entweder hoch, niedrig oder sogar Null in bezug auf die unbekannte, hier also gentoxische Substanz sein, je nachdem, ob die Aktivkohle bereits überladen ist, gerade im Zustand des Durchbruches ist, oder mit noch voller Adsorptions-Kapazität vorliegt.

Wenn auch die genannte Arbeit in "Mutation Research Letters" 323 (1994) teilweise widersprüchliche Resultate liefert, so zeigen die Ergebnisse insgesamt, daß ein nur auf Adsorption von in Wässern vorliegenden gentoxischen Substanzen an Aktivkohle basierendes technisches Verfahren für eine Aufbereitung von gentoxische Substanzen enthaltenden Wässem für Trinkwasserzwecke absolut nicht näher in Betracht kommen kann.

Nur am Rande sei noch darauf verwiesen, daß dieser Arbeit außerdem noch recht eindeutig zu entnehmen ist, daß eine Bestrahlung von derart kontaminierten Wässern mit UV-Licht sogar zu einer Erhöhung der in ihnen enthaltenen Summe an gentoxischen Substanzen führt.

Was nun die Aufbereitung von Wässern mit Gehalten an verschiedenen in Wässern für Trinkwasserzwecke nicht zugelassenen Substanzen ganz allgemein betrifft, sei zum Stand der Technik auf diesem Gebiet nur beispielsweise auf die AT 392.462 B verwiesen, welche für eine höchst effektive Entfernung von halogenierten Ethylenen aus Wässem eine Kombinationsbehandlung solcher Wässer mit Ozon und Elektronenstrahlung vorschlägt.

Aus der o.a. Arbeit von C. Helma in "Mutation Research Letters" wird deutlich, daß für eine wirksame Eliminierung von gentoxisch wirksamen Substanzen aus damit belasteten Wässern der Einsatz von Aktivkohle gänzlich außer Betracht bleiben muß. Weiters folgt aus den Ergebnissen der dort beschriebenen Versuche mit UV-Strahlung, welche in allen Fällen sogar zu einem Anstieg des Gehaltes an gentoxischen Substanzen geführt haben, daß alle auf UV-Bestrahlung basierenden Oxidationsverfahren, wie z.B. Ozon/UV-, H₂O₂/UV-, Natriumperoxodisulfat/UV-Verfahren u.dgl., ebenfalls nicht in Frage kommen.

Es wurde nun - insbesondere im Hinblick auf die o.a. negativen Resultate bei Einsatz von UV-Bestrahlung - überraschend gefunden, daß Elektronen-Bestrahlung in Kombination mit einer Ozon-Beaufschlagung in einem gentoxisch belasteten Wasser eine vollständige Zerstörung der gentoxisch wirksamen Substanzen herbeizuführen imstande ist.

Demgemäß ist Gegenstand der vorliegenden Erfindung ein Verfahren der eingangs genannten Art, das dadurch gekennzeichnet ist, daß ein Strom eines zumindest mit einer oder mehreren gentoxischen Substanz(en) belasteten Wassers - entweder direkt oder nach Durchlaufen einer vorgeschalteten, für eine qualitätsverbessemde Aufbereitung von Wasser vorgesehenen, an sich bekannten Vorbehandlungs-Stufe- sequentiell und/oder simultan zumindest einer Beaufschlagung mit Ozon in Gasphase und/oder mit einem mit Ozon angereicherten Wasser ("Starkwasser") und zumindest einer einmaligen Einwirkung schneller Elektronen durch Führen des genannten Wasser-Stroms durch das Strahlungsfeld eines Elektronenbeschleunigers unterworfen wird.

Unter dem Begriff "sequentiell und/oder simultan" ist zu verstehen, daß Elektronenstrahl-Einwirkung und Ozonbehandlung in beliebiger Reihenfolge hintereinander stattfinden können, daß z.B. gleichzeitig mit einer vorgeschalteten oder nachgeschalteten Ozonbehandlung auch eine Zuführung von Ozon in den Strom des zu behandelnden Wassers direkt im Strahlungsfeld des Elektronenbeschleunigers selbst erfolgen kann.

Bei der Bestrahlung von natürlich vorkommenden Wässern mit schnellen Elektronen wird die Energie der Elektronen praktisch zu 100 % vom Wasser aufgenommen, während die im Wasser gelösten natürlichen Inhaltsstoffe, wie z.B. Chloride, Sulfate, Bicarbonate, Nitrate, Sauerstoff u.dgl. sowie die organischen Anteile (als DOC erfaßt) praktisch keine Strahlungsenergie aufnehmen. Die vom Wasser absorbierte Strahlungsenergie führt zur Anregung und ionisation von Wassermolekülen und in weiterer Folge zur Bildung sehr reaktiver Radikale. Dieser Prozeß wird Wasserradiolyse genannt.

Bei dieser Wasserradiolyse entstehen primär Hydroxyl-Radikale, im folgenden kurz als OH-Radikale bezeichnet, solvatisierte Elektronen und Wasserstoffradikale. OH-Radikale stellen starke Oxidationsmittel dar, solvatisierte Elektronen und Wasserstoffradikale hingegen wirken stark reduzierend. Mengenmäßig entstehen etwa gleich große Anteile an den genannten oxidierend und reduzierend wirkenden Spezies.

Die vorhin erwähnten natürlichen Wasserinhaltsstoffe zeigen unterschiedliches Reaktionsverhalten gegenüber den bei der Wasserradiolyse gebildeten Radikalen. Während Chlorid und Sulfat praktisch mit keinem der gebildeten Radikale reagieren, sind Nitrate und Sauerstoff imstande, sehr schnell und effizient mit den reduzierend wirkenden Radikalen zu reagieren. Da diese beiden Substanzen meist in wesentlich höheren Konzentrationen vorliegen als die Schadstoffe, reagieren die reduzierend wirkenden Radikale vorwiegend mit Nitraten und Sauerstoff und gehen somit für den Schadstoffabbau selbst verloren. Darüber hinaus entstehen auf diesem Wege Nitrit und Wasserstoffperoxid, also Substanzen, die im Trinkwasser durchaus nicht erwünscht sind. Demzufolge erfolgt bei Bestrahlung nativer Wässer mit schnellen Elektronen der Schadstoffabbau meist zum überwiegenden Teil durch die oxidierend wirkenden OH-Radikale.

Konkurrenten der Schadstoffe für die für deren Abbau zur Verfügung stehenden Hydroxylradikale sind insbesondere Bicarbonate und Huminstoffe. Bicarbonate reagieren mit OH-Radikalen aber im allgemeinen wesentlich langsamer als viele Schadstoffe. Huminstoffe reagieren zwar schneller, sind aber meist nur in solchen Konzentrationen vorhanden, daß durchaus noch OH-Radikale übrig bleiben und für den Schadstoffabbau genützt werden können. Das erfindungsgemäße Verfahren kann bei Vorliegen von mutagen wirkenden Schwermetall-ionen im Wasser nur eine Vorstufe darstellen, z.B. durch Änderung der Oxidationsstufe.

Gemäß einer ersten bevorzugten Ausführungsform des neuen Verfahrens zur Aufbereitung von gentoxische Substanzen allein oder in Gegenwart von anderen Stoffen und Schadstoffen enthaltenden Wässern sieht **Anspruch** 2 vor, daß in den Strom des belasteten Wassers vor seinem Eintritt in das Strahlungsfeld des Elektronenbeschleunigers das Ozon, sei es nun in Gasphase oder in Form von mit Ozon angereichertem Wasser, eingebracht wird.

Im Rahmen des Verfahrens kann vorgesehen sein, daß der Strom des zumindest mit einer oder mehreren gentoxischen Substanz(en) belasteten Wassers während seines Durchlaufs durch das genannte Strahlungsfeld des Elektronenbeschleunigers mit Ozon in Gasphase oder in Form von mit Ozon angereichertem Wasser beaufschlagt wird.

Eine weitere Art der Verfahrensführung mit besonders hoher Effektivität zeichnet sich dadurch aus, daß der Strom des gentoxisch belasteten Wassers vor seinem Eintritt in das Strahlungsfeld des Elektronenbeschleunigers und zusätzlich während seines Durchlaufs durch das genannte Strahlungsfeld mit Ozon in Gasphase oder in Form von mit Ozon angereichertem Wasser beaufschlagt wird.

Bei den gemäß den bis jetzt angesprochenen Verfahrensführungen ist also eine Beaufschlagung des Wasser-Stroms mit Ozon vor und/oder während der Einwirkung der schnellen Elektronen innerhalb des Strahlungsfeldes des Elektronenbeschleunigers vorgesehen, was bewirkt, daß die vorerwähnten reduzierenden Spezies, nämlich solvatisierte Elektronen und Wasserstoff-Radikale, in OH-Radikale umgewandelt werden. Damit wird die Effizienz des Schadstoff-Abbaues infolge wesentlich erhöhten OH-Radikal-Angebots beträchtlich erhöht und gleichzeitig werden die beiden unerwünschten Nebenprodukte Nitrit und Wasserstoffperoxid eliminiert. Somit stellt bei Wässern mit höheren Nitrat- und Sauerstoffgehalten eine Elektronenbestrahlung bei gleichzeitiger Anwesenheit von vorher und/oder gleichzeitig mit der Bestrahlung eingebrachtem Ozon die effizienteste Methode für den Schadstoff-Abbau und insbesondere für den Abbau gentoxisch wirksamer Substanzen dar.

Eine weitere alternative Verfahrensführung kann darin bestehen, daß der Strom des Wassers weder vor seinem Eintritt in das Strahlungsfeld des Elektronenbeschleunigers noch während seines Durchlaufs durch dieses Strahlungsfeld mit Ozon beaufschlagt wird, sondern es erfolgt bei dieser Variante die Beaufschlagung des Wasser-Stromes mit Ozon, sei es nun in Gasphase oder in Form von "Starkwasser", erst nach Verlassen des Einwirkungsbereiches der schnellen Elektronen. Diese Art der Führung des erfindungsgemäßen Verfahrens unter Nachschaltung der Ozonbeaufschlagung des Wasser-Stromes im Anschluß an die Elektronenbestrahlung hat folgende Vorteile, wobei dazu etwas weiter auszuholen ist:

Es gibt native Wässer, bei denen der DOC-Gehalt sehr hoch ist, gleichzeitig aber der Nitrat- und der Sauerstoffgehalt relativ niedrig sind. In diesem Fall reagieren die OH-Radikale vorwiegend mit den organischen Wasser-inhaltsstoffen, der Schadstoffabbau wird dann vorwiegend über die reduzierend wirkenden Radikale, nämlich solvatisierte Elektronen und Wasserstoff-Radikale erfolgen. In solchen Fällen wäre eine, wie weiter oben beschriebene, Einbringung von Ozon in den Wasser-Strom vor und/oder während der Bestrahlung mit den schnellen Elektronen kontraproduktiv.

Demgemäß eignet sich die eben beschriebene, vergleichsweise inverse Sequenz von Elektronen-Bestrahlung und ihr dann nachfolgender Beaufschlagung des Wasser-Stromes mit Ozon besonders für gentoxisch wirksame Substanz(en) enthaltende Wässer, in denen der Gehalt an DOC relativ hoch ist, gleichzeitig aber die Gehalte an Nitrat und Sauerstoff relativ niedrig sind. Diese Ozonzugabe nach Bestrahlung trägt insbesondere zur Entfernung des bei der Bestrahlung gebildeten Nitrits wesentlich bei.

Das oben beschriebene und unerwartete Auftreten gentoxischer Substanzen in einem Grundwasser wirft die ganz wesentliche Frage auf, ob die bisher technisch eingesetzten Reinigungsverfahren, vornehmlich Aktivkohle-Filtrations-Verfahren, überhaupt in der Lage sind, in ähnlicher Weise wie das aus der AT 392.462 B bekannte Ozon-Elektronenstrahl-Kombinationsverfahren, allenfalls vorhandene, bezüglich Herkunft und Zusammensetzung aber völlig unbekannte gentoxische Substanzen aus dem zu reinigenden Wasser zu entfernen.

Unter den genannten Voraussetzungen kann die Antwort nur ein klares "Nein" sein. Ist die Zusammensetzung der gentoxischen Substanz(en) nicht bekannt und existiert kein Verfahren, das ihren prompten Nachweis erlaubt, dann kann man für eine Trinkwasser-Aufbereitung keine Aktivkohle-Anlage einsetzen, weil man nie weiß bzw. überprüfen kann, wann die gentoxische(n) Substanz(en) durchbricht (-brechen).

Ein konkreter Fall eines gesperrten Brunnens in der Mittemdorfer Senke in Österreich zeigt die eben beschriebenen Verhältnisse auf: Die chemische Untersuchung des Wassers dieses Brunnens weist einen DOC-Wert < 0,4 mg/l aus. Das bedeutet, daß der Anteil der organischen Wasser-inhaltsstoffe unter der Nachweisgrenze der DOC-Bestimmung liegt; daneben sind der AOX-Wert mit ca. 85 µg/l und der POX-Wert mit ca. 82µg/l bei einem Perchlorethylen-Gehalt des Wassers von 81,5 µg/l im wesentlichen durch das Perchlorethylen bestimmt. Damit gibt es kaum eine konkrete Aussicht, die zusammen mit dem Perchlorethylen gleichfalls vorhandenen gentoxischen Substanzen jemals zu identifizieren bzw. anders als durch Mutagenitätstests nachzuweisen.

Unter diesen Umständen ist eine Methode der Reinigung, bei welcher ein Adsorptionsmittel-Filter mit diesen gefährlichen gentoxischen Substanzen beladen wird, ein Durchbruch aber nicht unmittelbar, sondern nur mit mehrwöchiger Verzögerung feststellbar ist, weiters rechtzeitig vor Durchbruch auf ein unbeladenes Filter umzuschalten ist, und letztlich das beladene Filter auch noch zu regenerieren ist, für eine Wasseraufbereitung absolut unbrauchbar.

Das erfindungsgemäße Verfahren bringt ein gänzlich anderes Prinzip in die Aufbereitung ein, es sorgt, wie gefunden wurde, für eine echte Zerstörung der gentoxischen Substanzen unter Zurücklassung von offensichtlich ausschließlich harmlosen Stoffen, wobei es zu keinem Durchbruch eines Filters kommen kann und es somit auch keiner Kontrolle bezüglich eines solchen Filter-Durchbruchs od.dgl. bedarf.

Eine weitere, im Rahmen der vorliegenden Erfindung besonders bevorzugte Verfahrensform offenbart der **Anspruch** 3, gemäß welchem vor der bis jetzt erläuterten sequentiellen und/oder simultanen Kombination eines Einwirkens schneller Elektronen auf den Strom des zu behandelnden gentoxisch belasteten Wassers und dessen Beaufschlagung mit Ozon, der genannte Wasser-Strom einer Vorbehandlung mit einem Adsorptionsmittel unterworfen wird.

Dazu ist zur Erläuterung folgendes auszuführen: Üblicherweise werden in Wässem, in denen gentoxische Substanzen unbekannter Struktur und Konzentration nachweisbar sind, zusätzlich auch noch übliche und bekannte toxische Substanzen in bekannter Konzentration vorliegen. Um nun die Effizienz des an sich ja kostspieligen Bestrahlungsverfahrens optimal und soweit wie möglich, ausschließlich für die Entfernung der auf andere Weise nicht zerstörbaren gentoxisch wirksamen Substanzen nutzen zu können, bietet diese Verfahrensvariante den besonderen Vorteil, daß die üblichen toxischen Substanzen bzw. Schadstoffe vor Durchführung des Bestrahlungsschrittes durch ein an sich bekanntes Verfahren eliminiert werden.

Dafür bietet sich insbesondere die an sich bewährte Aktivkohle-Filtration an, da Aktivkohle ein breites Spektrum organischer Schadstoffe zu adsorbieren imstande ist, was die Aktivkohle vor allen anderen Adsorptionsmitteln dafür prädestiniert, die genannten Schadstoffe auf wirtschaftliche Weise aus einem Wasser zu entfernen.

Bei Vorhandensein gentoxischer Substanzen unbekannter Struktur im Wasser, die nur über ein sehr zeitaufwendiges biologisches Mutagen-Test-Verfahren nachgewiesen werden können, ist Aktivkohle nicht einsetzbar - selbst dann nicht, wenn die gentoxische Substanz adsorbiert wird - weil ein Durchbruch dieser Substanz eben wegen der langen Analysendauer nicht rechtzeitig erfaßt werden kann.

Wenn nun das erfindungsgemäße Verfahren mit Elektronenbestrahlung und Ozon-Beaufschlagung in Kombination mit einer vorgeschalteten Aktivkohle-Filtration eingesetzt wird, läßt sich der Vorzug einer kostengünstigen Entfernung von üblichen Schadstoffen am wenig aufwendigen Aktivkohle-Filter mit dem Vorzug eines wesentlich geringeren Energiebedarfs für die Eliminierung der gentoxisch wirksamen Substanz(en) mittels Elektronenbestrahlung kombinieren. Es sorgt dann die Aktivkohle für die Entfernung der üblichen toxischen Substanzen aus dem Wasser, während das Bestrahlungsverfahren voll für die Zerstörung der gentoxisch wirksamen Substanz(en) Sorge trägt. Infolge dieser Zerstörung, also eigentlich Umwandlung in harmlose Substanzen, ist auch das Problem der Entsorgung solcher Substanzen nicht gegeben.

Was nun die Energie der schnellen Elektronen, durch deren Strahlung der Strom des zu behandelnden Wassers in jedem Fall zu führen ist, betrifft, so sind, wie aus **Anspruch** 4 ersichtlich, Werte von etwa 300 bis etwa 4000 keV, und vorteilhafterweise Werte im Bereich von 500 bis 1000 keV bevorzugt, was in etwa jenen mittleren Energien entspricht, welche für einen Abbau bzw. eine Zerstörung der gentoxisch wirksamen Substanz(en) - wie gefunden wurde - durchaus ausreichen. Der erstgenannte Energiebereich garantiert im wässerigen Medium mittlere Eindringtiefen im Bereich von etwa 1 bis 25 mm, der zweitgenannte Energiebereich solche von 1,4 bis 3 mm, was jeweils eine Schichtdicke des zu behandelnden Wasser-Stromes von etwa 2 bis etwa 40 mm, bevorzugt von etwa 3 bis etwa 10 mm zuläßt.

Es sei nochmals betont, daß sich das erfindungsgemäße Verfahren und seine verschiedenen Ausführungsformen keineswegs darauf beschränken, nur Wässer, welche ausschließlich gentoxisch wirksame Substanzen enthalten, zu behandeln und letztlich nur diese gentoxisch wirksamen Substanzen zu zerstören, sondern daß - siehe **Anspruch** 5 - vielmehr auch ein Strom eines mit gentoxischen Substanzen und anderen Substanzen, insbesondere mit anders äußerst schwer abbaubaren halogenierten Ethylenen belasteten Wassers erfolgreich aufbereitet werden kann, sodaß letztlich ein Wasser mit Trinkwasser-Qualität erzielbar ist.

Weiters besteht der Vorteil darin, daß der nötige Dosisaufwand ja vom üblichen toxischen Schadstoff und seiner Menge bestimmt wird, während die in meist um mehrere Zehner-Potenzen geringeren Mengen vorhandenen, gentoxischen Substanzen praktisch ohne zusätzlichen Dosisaufwand mitzerstört werden.

Zur Steigerung der Effektivität und zur optimalen Nutzung der zum Einsatz kommenden Elektronenbeschleunigungs-Anlage ist eine Ausführungsform des neuen Verfahrens gemäß **Anspruch** 6 von Vorteil, welches eine relativ zur Eindringtiefe der schnellen Elektronen wesentlich erhöhte Schichtdicke des zu behandelnden Wasser-Stroms und damit wesentlich gesteigerte Durchsätze desselben zuläßt. Als Anhaltspunkt sei hier nur kurz wiederholt, daß die maximale Eindringtiefe von Elektronen in Wasser bei einer 500 keV-Strahlung etwa 1,4 mm beträgt.

Was die Ozoneinbringung in das zu behandelnde, zumindest mit den in Rede stehenden gentoxisch wirksamen Substanzen belastete Wasser betrifft, so stehen insbesondere die Methoden gemäß **Anspruch** 7 zur Wahl, wobei der Einsatz von Ozon in der Gasphase besonders bevorzugt ist. Es dürften insbesondere Grenzflächen-Konzentrationsgradienten-Effekte dafür ausschlaggebend sein, daß das Ozon - wenn es in Gasform zur Verfügung steht - besonders günstige Resultate bringt. Der besondere Effekt einer Verfahrensführung mit einer Einbringung von gasförmigem Ozon in Mischung mit Sauerstoff in den Wasser-Strom basiert darauf, daß eine Hemmung des Überganges des Ozons in die flüssige Phase des zu behandelnden Wasser-Stromes deshalb nicht eintreten kann, weil durch die reduzierend wirkenden Radiolyse-Produkte des Wassers bzw. durch deren Reaktionsprodukte das in das Wasser übergehende Ozon praktisch sofort in OH-Radikale übergeführt wird und sich dort praktisch nie eine übergangshemmende Ozon-Konzentration aufbauen kann. Darüber hinaus kann bei der Zuführung von Ozon in der Gasphase, wenn sie gleichmäßig, z.B. über Fritten oder gleichmäßig verteilte Düsen, im gesamten Einwirkungsbereich der Strahlung erfolgt, eine gleichmäßig hohe OH-Radikal-Konzentration aus dem Zerfall erreicht werden, wodurch im Strahlungsbereich eine konstante OH-Radikal-Konzentration garantiert ist, was bei einer Einbringung des Ozons in Form von mit Ozon angereichertem Wasser ("Starkwasser") so nicht der Fall ist.

Ein besonderer Nebeneffekt bei der Einbringung von Ozon in der Gasphase, insbesondere in Form eines gasförmigen Ozon-Sauerstoff-Gemisches, welches typischerweise etwa 100 mg O₃/Liter O₂ enthält, besteht darin, daß dadurch das damit beaufschlagte Wasser letztlich immer mit Sauerstoff gesättigt ist, was ihm als Trinkwasser besondere Frische verleiht.

Alternativ oder zusätzlich kann vorgesehen sein, daß bei simultaner Einwirkung von Elektronenstrahlung und Ozon das Ozon bzw. ein mit Ozon angereichertes Wasser ("Starkwasser") von der der jeweiligen Elektronenstrahlungsquelle abgewandten Seite her in die Schicht des das Strahlungsfeld des Elektronenbeschleunigers durchlaufenden Stroms des zu behandelnden Wassers durch über die Strahlungsquerschnittsfläche gleichmäßig verteilte Zugabestellen eingebracht wird, was gleichmäßig hohe Ozon-Konzentration und dosierungstechnische Vorteile bringt.

Strömungstechnisch im Hinblick auf eine Vermeidung von unerwünschten Konzentrationsgefällen bezüglich des Ozons innerhalb der das Elektronenstrahlungsfeld durchströmenden Wasserschicht günstig ist eine Ausführungsvariante gemäß **Anspruch** 8, wobei sich für die genannte Zuführung von Ozon bzw. mit Ozon beaufschlagtem Wasser besonders die dort angegebene Detaillösung bewährt hat.

Eine besonders günstige Nutzung des Synergismus von Elektronenstrahlung und Ozon-Beaufschlagung läßt sich, wie schon weiter oben erläutert ist, beim Arbeiten mit einer Wasserschicht im Einwirkungsbereich der Elektronenstrahlung erzielen, deren Dicke größer ist als die Eindringtiefe der Elektronen, wenn der der eindringenden Elektronenstrahlung zugekehrte Volumsanteil des den Strahlungsbereich durchströmenden Wassers mit hohem Durchmischungsgrad mit dem restlichen Volumsanteil der Wasserschicht unter Herbeiführung turbulenter Strömung gemischt wird, wie dies **Anspruch** 9 vorsieht. Durch die dort beschriebenen Maßnahmen zur Generierung und Aufrechterhaltung von Turbulenz im Wasser-Strom kann eine Ausdehnung des Schadstoffabbaues vom der Strahlungsquelle zugekehrten Volumsanteil auf das Volumen von deren gesamtem Einwirkungsbereich erreicht werden. Dies erbringt dann eine beachtliche Erhöhung des Durchsatzes oder, wenn eine solche nicht gefordert sein soilte, kann mit einem Elektronenbeschleuniger entsprechend geringerer Leistung das Auslangen gefunden werden.

Elegant ist und insbesondere auch eine besonders gut regelbare Durchmischung ermöglicht eine Art Tubulenz-Sicherstellung, welche vorsieht, daß die Strömungsenergie einer in den Strom des Wassers eingebrachten bzw. z.B. eingedüsten, wässerigen Ozon-Lösung und/oder eines ozonhältigen Gases selbst genutzt werden kann.

Gemäß **Anspruch** 10 ist vorgesehen, daß das Wasser nach Verlassen der Gesamt-Behandlung einen bestimmten maximalen Ozongehalt aufweist.

Auf diese Weise ist gewährleistet, daß in dem erfindungsgemäß behandelten Wasser nach Verlassen des Prozesses weder H₂O₂ noch Nitrit enthalten sind.

Einen weiteren Gegenstand der vorliegenden Erfindung bildet eine im Hinblick auf eine optimierte Nutzung der Elektronenstrahlung besonders vorteilhafte Ausführungsform einer Vorrichtung zur Durchführung des vorher in seinen Einzelheiten und bevorzugten Ausgestaltungen eingehend beschriebenen Verfahrens, wie sie aus **Anspruch** 11 hervorgeht.

Besonders günstig kann der Ozongehalt in der Durchflußkammer geregelt werden, wenn die Vorrichtung in der im **Anspruch** 12 beschriebenen Weise ausgestattet ist. Der dort vorgesehene Sensor zur Ermittlung eines jeweils aktuellen Ozon-Gehaltes kann z.B. in einem von der Abflußleitung der Durchflußkammer abzweigenden By-pass als Durchflußzelle eines UV-Spektral-Fotometers ausgebildet sein.

Um eine besonders gleichmäßige Aufrechterhaltung der Ozon-Konzentration in dem der Elektronenstrahlung auszusetzenden, zumindest mit einer gentoxisch wirksamen Substanz und Schadstoffen belasteten Wasser zu gewährleisten, ist gemäß **Anspruch** 13 vorgesehen, daß die der Einwirkung der Elektronenstrahlung abgewandte Seite der Durchflußkammer zumindest teilweise als Siebboden oder Fritte ausgebildet ist, wobei altemativ oder zusätzlich eine Erhöhung des Grades der Nutzung der Elektronenstrahlung und auch des eingebrachten Ozons in vorteilhafter Weise erreicht wird, wenn in der Strahleneinwirkungskammer Einbauten zur Erzeugung und Aufrechterhaltung turbulenter Strömung angeordnet sind.

Schließlich betrifft **Anspruch** 14 eine dem erfindungsgemäßen, eine Ozoneinbringung und die Einwirkung schneller Elektronen umfassenden Prozeß in irgendeiner seiner oben genauer detaillierten Ausführungsformen vorgeschaltete Adsorptionsstufe.

Weiterer wesentlicher Gegenstand der Erfindung ist die Verwendung des neuen Verfahrens gemäß **Anspruch** 15.

Schließlich ist die Verwendung der oben in mehreren Varianten beschriebenen Vorrichtung gemäß **Anspruch** 16 ein wesentlicher Gegenstand der vorliegenden Erfindung.

Die zur ergänzenden Erläuterung der Erfindung dienende Zeichnung zeigt die schematische Darstellung einer zur Durchführung des neuen Verfahrens besonders geeigneten Anlage mit Hervorhebung der für Elektronenbestrahlung und Ozon-Beaufschlagung vorgesehenen Durchflußkammer.

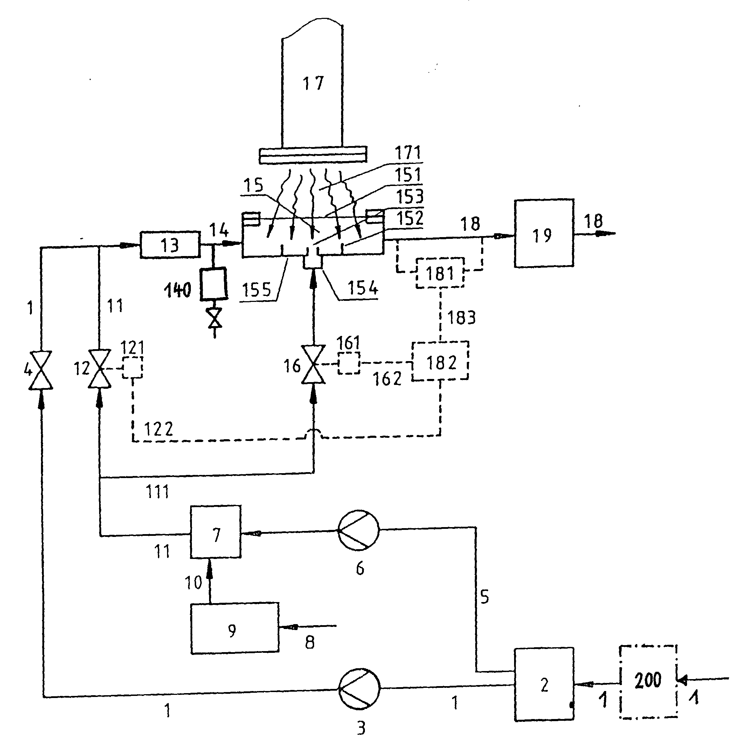

Bei der in der Zeichnung schematisch gezeigten Anlage zur Behandlung von zumindest mit einer oder mehreren gentoxisch wirksamen Substanz(en) belasteten Wässern, wird über Leitung 1, über ein gegebenenfalls vorgesehenes Aktivkohle-Filter 200, einen Pufferbehälter 2 und eine Pumpe 3 ein Hauptstrom des gentoxische Substanz(en) und sonstige Schadstoffe enthaltenden Wassers zugefördert, wobei vom Behälter 2 über eine Zweigleitung 5 mittels Pumpe 6 ein Teilstrom des Wassers in einen Ozon-Starkwasserbehälter 7 mit Mischer eingebracht wird, der seinerseits über Leitung 10 aus dem über eine Zuleitung 8 mit Sauerstoff gespeisten Ozonisator 9 mit Ozon bzw. einem Ozon-Sauerstoff-Gemisch versorgbar ist. Im Behälter 7 wird mit Ozon angereichertes "Starkwasser" erzeugt und dieses wird über Leitung 11 der oben erwähnten Leitung 1 für unbehandelt gebliebenes Ausgangswasser zugeleitet, wonach die vereinigten Ströme 1 und 11 im Mischer 13 zur Einstellung einer gewünschten Ausgangskonzentration an Ozon innig vermischt werden. Das so erhaltene, nun ozonhältige, zu reinigende Wasser wird über Leitung 14 in die - hier unterhalb eines Elektronenbeschleunigers 17 mit einem Strahlungsbereich 171 angeordnete - Durchflußkammer 15 mit elektronendurchlässigem Fenster 151 eingebracht und die durchströmende Wasserschicht wird der Einwirkung der Elektronenstrahlung innerhalb des Bereichs 171 ausgesetzt. Bei der gezeigten Vorrichtung weist etwa in der Hälfte der Durchflußstrecke der Boden 155 der Kammer 15 eine Reihe von mit einem Zuführungskanal 154 in Verbindung stehende Düsenöffnungen 153 auf, über welche zur Sicherung einer Mindestkonzentration an Ozon in der Kammer 15 mittels von der Starkwasserleitung 11 abzweigenden Teilstromes 111 Starkwasser direkt in die Bestrahlungskammer 15 eingebracht werden kann. Bevorzugt ist es jedoch, dort die ergänzenden Mengen Ozon in Form eines etwa 12 Vol.% Ozon enthaltenden Sauerstoffstroms über die Bodendüsen 153, die auch bis zum Wasserausfluß hin über den Kammerboden verteilt angeordnet sein können, zuzuführen.

Zur Entfernung nicht gelöster, also überschüssiger Anteile des in Form von Starkwasser oder direkt eingebrachten Gasgemisches an Sauerstoff aus dem Wasser vor dessen Eintritt in die Kammer 15, kann eine von Leitung 14 abzweigende Entgasungseinrichtung 140 vorgesehen sein.

Es ist hier wichtig anzumerken, daß über die Leitung 11 Ozon auch in Form eines gasförmigen Ozon-Sauerstoff-Gemisches in das durch Leitung 1 zuströmende Wasser eingetragen werden kann, welches dann im Mischer 13 intensiv in das Wasser eingemischt wird. Über den Weg 8,9,10,11 (ohne Starkwasser-Mischer 7) und von 11 abzweigende Leitung 111 kann (zusätzlich) auch direkt gasförmiges Ozon-Sauerstoffgemisch eingetragen werden, wodurch z.B. bei Vorsehen von über den Boden 155 der Kammer 15 verteilten Düsen 153 eine besonders gleichmäßige Ozonkonzentration und damit letztendlich eine entsprechend gleichmäßige OH-Radikal-Konzentration erreicht werden kann.

Vorteilhaft ist die Aufrechterhaltung einer Ozonkonzentration von maximal 0,1 ppm, bevorzugt maximal 0,05 ppm, nach dem Verlassen der Durchflußkammer 15. Die Kammer 15 weist zur Erhöhung ihrer Wirksamkeit Elemente, z.B. Schikanen 152, zur Generierung turbulenter Strömung auf. In der Kammer 15 erfolgt infolge des oben beschriebenen Synergismus zwischen Elektronenstrahlung und Ozon der Abbau der jeweils vorhandenen gentoxischen Substanz(en) zu biologisch unbedenklichen Stoffen. Das in Kammer 15 nun erfindungsgemäß aufbereitete Wasser wird über eine ein Ausgleichsgefäß 19 aufweisende Leitung 18 abgeführt und kann direkt in ein Wasserversorgungssystem eingespeist werden. Die in der Zeichnung gezeigten Durchflußregelorgane 4,12 und 16 dienen einer aufeinander abgestimmten Einstellung der Ströme von zu behandelndem Wasser und von ozonisiertem Starkwasser bzw. ozonhältigem Gas.

Mit unterbrochenen Linien ist auch eine bevorzugte Ausführungsform einer Regelung der erfindungsgemäßen Vorrichtung dargestellt:

An der die Durchflußkammer 15 verlassenden Leitung 18 ist ein durch einen Bypass mit nicht gezeigtem Spektralphotometer gebildeter Sensor 181 angeordnet, der über eine Signalleitung 183 mit einer Steuerung 182 verbunden ist. Von der Steuerung 182 gehen in der gezeigten Anordnung zwei Steuerleitungen 162,122 zu Stellorganen 161,121 für die Ventile 16 und 12 in der Starkwasser- oder Ozon/Sauerstoff-Teilstromleitung 111 und in der Starkwasser- oder Ozon-Gaszuleitung 11 aus. Auf diese Weise kann eine Steuerung der Ozonzufuhr sowohl im der Durchflußkammer 15 zugeführten Wasser als auch innerhalb der Kammer 15 selbst erfolgen.

Die hier beschriebene Vorrichtung kann auch eine Durchflußkammer 15 ohne Fenster 151 aufweisen, wodurch letztlich die Strahlungsausbeute erhöht wird.

### Beispiel 1:

Ein Brunnenwasser aus der "Mitterndorfer Senke" (Österreich), das mit 52 µg Perchlorethylen/L und gentoxischen Substanzen an sich unbekannter Herkunft und Zusammensetzung kontaminiert war, wurde in einer im Österreichischen Forschungszentrum Seibersdorf befindlichen Pilotanlage mit Hilfe des erfindungsgemäßen Ozon-Elektronenstrahl-Kombinationsverfahrens gereinigt. Der Durchfluß durch die Anlage betrug 865 Uh, die durchstrahlte Fläche betrug 50 • 20 cm², die Höhe der Durchflußkammer war 3 mm, bestrahlt wurde mit einem Elektronenstrahlstrom von 6 mA, wobei die Energie der beschleunigten Elektronen 500 keV betrug, was einer maximalen Eindringtiefe der Elektronen von etwa 1,4 mm entspricht. Gleichzeitig betrug die Ozon-Konzentration etwa 7 mg Ozon/L H₂O. Der Perchlorethylen-Gehalt wurde unter diesen Bedingungen bis auf die extrem niedrige Restkonzentration von 0,7 µg/L abgebaut (der in Österreich zulässige Grenzwert im Trinkwasser beträgt 10 µg/L).

Die im Wasser neben dem gentoxisch harmlosen Perchlorethylen vorhanden gentoxischen Substanzen wurden zur Gänze zerstört, wie die Untersuchungen unter Einsatz des Kleinkerntestes mit der Pflanze TRADESCANTIA ergeben haben, siehe dazu folgende Ergebnis-Tabelle.

**TABELLE 1**

| Einfluß der Wasserproben I (vor Behandlung) und II (nach Behandlung) auf die Kleinkernraten in Pollentetraden von *Tradescantia.* | | |
|---|---|---|
| Probe | Einzelwert ³⁾ | M +/- SD |
| I | 53,6; 19,2; 9,6; 53,9; 29,7 | 33,2 ±20,0⁺ |
| II | 5,8; 5,4; 11,0; 14,9; 6,3 | 8,68 ± 4,1 |
| Neg.Kontr. ¹⁾ | 2,9; 6,9; 2,9; 12,1; 10,1 | 6,98 ± 4,1 |
| Pos. Kontr. ²⁾ | 31,7; 19,7; 17,0; 16,3; 16,2 | 20,18 ± 6,5 |

| | | |
|---|---|---|
| ¹⁾ Als Negativkontrolle wurden die Schnittlinge in Wiener Leitungswasser exponiert, in Voruntersuchungen wurde sichergestellt, daß dieses Wasser die Kleinkernfrequenzen nicht beeinflußt (Steinkellner et al., 1997). | | |
| ²⁾ Als Positivkontrolle wurde Arsentrioxid verwendet, die Substanz wurde in Leitungswasser gelöst (Endkonzentration 0,25 mM). | | |
| ³⁾ Die Einzelwerte beziehen sich auf die Zahl der Kleinkerne/100 Pollentetraden; pro Meßpunkt wurden 5 Knospen à 300 Pollentetraden ausgewertet. | | |
| ⁺ = statistische Signifikanz, p < 0,05. | | |

Wie die Tabelle 1 zeigt, war an Probe I, also Wasser vor der erfindungsgemäßen Ozon-Elektronenstrahl-Kombinationsbehandlung eine deutliche Erhöhung der Kleinkernfrequenz im Vergleich zur Negativkontrolle festzustellen, die erfindungsgemäß behandelte Wasserprobe II zeigte keinerlei derartige Erhöhung. Mit der Positivkontrolle (Arsentrioxid 0,25 mM) wurde, wie erwartet, ebenfalls ein deutlicher Anstieg gemessen.

Dieses auf einer sehr zeitaufwendigen und kostspieligen Bestimmungsmethode beruhende Beispiel zeigt deutlich den mit der erfindungsgemäßen Elektronenstrahl-Ozon-Kombinationsbehandlung eines Wassers erzielbaren, aus gesundheitspolitischer Sicht in seinem Wert im Moment in seiner Tragweite noch gar nicht abzuschätzenden Effekt der erfindungsgemäß herbeiführbaren Zerstörung gentoxisch wirksamer Substanzen.

### Beispiel 2:

Dieses Beispiel arbeitet mit Maleinsäure. Maleinsäure ist eine der Substanzen, die als Positivkontrolle für den Tradescantia-Kleinkemtest verwendet wird.

Wiener Leitungswasser (pH 6,8; 251 mg/L Bikarbonat; 6,5 mg/L Nitrat; 4,5 mg/L Chlorid; 30,5 mg/L Sulfat; 8,2 mg/L Sauerstoff; 0,6 mg/L DOC) wurde mit 220 mg/L Maleinsäure (MS) und bei einigen Versuchen zusätzlich mit jeweils 5 mg/L Trichlorethylen (TCE) und Perchlorethylen (PCE), versetzt, mit dem Tradescantia-Kleinkerntest (Ma, T.H. (1983). Tradescantia Micronuclei test (Trad-MN) for environmental clastogens, in: A.R. Kolber, T.K. Wong, L.D. Grant, R.S. Dewoskin and T.J. Hughes (Eds.), In Vitro Toxicity Testing of Environmental Agents, Part A, Plenum Press, New York 1983, pp. 191-214) untersucht und anschließend in der bereits erwähnten Pilotanlage mit Hilfe des erfindungsgemäßen Ozon-Elektronenstrahl-Kombinationsverfahrens behandelt. Der Durchfluß durch die Anlage betrug wieder 865 Uh, bestrahlt wurde mit einem Elektronenstrahlstrom von 5,5 mA bei einer Ozonanfangskonzentration von 6 mg/L. Nach der erfindungsgemäßen Behandlung wurde der Gehalt an Maleinsäure spektro-photometrisch gemessen, die TCE- bzw. PCE-Konzentraion im Wasser wurde gaschromatisch bestimmt. Unter den gegebenen Bedingungen wurde die Maleinsäure und das TCE bis unter die Nachweisgrenze, das PCE bis auf eine Restkonzentration von 150 µg/L abgebaut. Die Ergebnisse dieser Versuchsreihe unter Verwendung des Tradescantia-Kleinkerntestes zeigt die nachfolgende Tabelle.

**TABELLE 2**

| Ergebnisse des Tradescantia-Kleinkerntests mit Wiener Leitungswasser (mit und ohne Zugabe verschiedener Chemikalien) vor und nach der Behandlung mit dem Ozon-Elektronenstrahl-Kombinationsverfahren. | |
|---|---|
| Probe | Gentoxischer Respons in Kleinkerne/100 Tetraden (Mittelwert aus 5 Einzelwerten) |
| Leitungswasser (als Negativkontrolle) | 3,2 ± 2,1 |
| Leitungswasser mit jeweils 5 mg/L TCE und PCE versetzt (vor Behandlung) | 3,2 ± 1,9 |
| Leitungswasser mit jeweils 5 mg/L TCE und PCE versetzt (nach Behandlung) | 3,0 ± 2,2 |
| Leitungswasser mit 220 mg/L MS versetzt (vor Behandlung) | 8,4 ± 4,0 |
| Leitungswasser mit 220 mg/L MS versetzt (nach Behandlung) | 3,6 ± 2,1 |
| Leitungswasser mit jeweils 5 mg/L TCE und PCE plus 220 mg/L MS versetzt (vor Behandlung) | 8,1 ± 4,1 |
| Leitungswasser mit jeweils 5 mg/L TCE und PCE plus 220 mg/L MS (nach Behandlung) | 3,0 ± 1,9 |

### Beispiel 3:

Ein weiterer Versuch wurde mit Formaldehyd, einem möglichen kanzerogenen Stoff durchgeführt. Formaldehyd wurde in Wiener Leitungswasser gelöst, die Konzentration wurde auf 100 µg/L eingestellt. Getestet wurde dieses formaldehydhältige Leitungswasser auf mutagene Wirkung mit Hilfe des "Salmonella typhimurium Revers Mutation Assay (AMES-Test) unter Verwendung des Bakterienstammes TA 100.
(Ames, B.N., J. McCann and E. Yamasaki (1975). Methods for detecting carcinogens and mutagens with the Salmonella/mammalian-microsome mutagenicity test. Mutation Res. 31, 347-364). Bei einigen Versuchen wurde dem Leitungswasser 5 mg/L Trichlorethylen zugesetzt.

Referenzsubstanz für die Positivkontrolle war Aflatoxin B1, gelöst in deionisiertem Wasser.

Das formaldehydhältige Leitungswasser wurde in der Seibersdorfer Pilotanlage mit einem Elektronenstrahlstrom von 12 mA bei gleichzeitiger Ozonbegasung (Gasstrom 100 L O₁/h; Ozonkonzentration 100 mg O₃/L O₂) und einem Wasserdurchfluß von 945 Uh behandelt. Die Tabelle 3 zeigt die Ergebnisse:

**TABELLE 3**

| Ergebnisse des AMES-Testes an einem mit Formaldehyd und Trichlorethylen versetzten Leitungswasser vor und nach einer Behandlung mit dem Ozon-Elektronenstrahl-Kombinationsverfahren. | | | | | |
|---|---|---|---|---|---|
| Probe | Mutantenkolonien pro Petrischale Stamm TA 100 | | | | |
| 0,1 ml DMSO (als Negativkontrolle) | 123 | 124 | 149 | 131 | 134 |
| Leitungswasser | 94 | 137 | 123 | 139 | 118 |
| Leitungswasser nach Zugabe von Formaldehyd und TCE (vor Behandlung) | 350 | 274 | 289 | 320 | 236 |
| Leitungswasser nach Zugabe von Formaldehyd und TCE (nach der Behandlung) | 150 | 105 | 139 | 152 | 118 |
| Positiv-Kontrolle | 638 | 656 | 509 | | |

## Patentansprüche

1. Verfahren zur Konversion von zumindest mit einer oder mehreren gentoxischen Substanz(en) belastetem Wasser, bevorzugt Grundwasser, in ein Trinkwasser-Qualität aufweisendes Wasser ("Trinkwasser"), dadurch gekennzeichnet, daß ein Strom eines zumindest mit einer oder mehreren gentoxischen Substanz(en) belasteten Wassers - direkt oder nach Durchlaufen einer vorgeschalteten, für eine qualitätsverbessernde Aufbereitung von Wasser vorgesehenen, an sich bekannten Vorbehandlungs-Stufe - sequentiell und/oder simultan zumindest einer Beaufschlagung mit Ozon in der Gasphase und/oder in mit Ozon angereichertem Wasser ("Starkwasser") und zumindest einer einmaligen Einwirkung schneller Elektronen durch Führen des genannten Wasser-Stroms durch das Strahlungsfeld eines Elektronenbeschleunigers unterworfen wird.

2. Verfahren nach Anspruch 1, dadurch gekennzeichnet, daß ein Strom eines zumindest mit einer oder mehreren gentoxischen Substanz(en) belasteten Wassers -mit vorherigem oder ohne vorheriges Durchlaufen einer vorgeschalteten, für eine qualitätsverbessernde Aufbereitung von Wasser vorgesehenen, an sich bekannten Vorbehandlungs-Stufe- zumindest einer einmaligen Einwirkung schneller Elektronen durch Führen des genannten Wasser-Stroms durch das Strahlungsfeld eines Elektronenbeschleunigers unterworfen wird, wobei der genannte Strom des zumindest gentoxisch belasteten Wassers vor seinem Eintritt in das genannte Strahlungsfeld des Elektronenbeschleunigers und/oder während des Durchlaufens desselben - oder aber erst nach Verlassen des Strahlungsfeldes - mit Ozon beaufschlagt wird.

3. Verfahren nach Anspruch 1 oder 2, dadurch gekennzeichnet, daß der Strom des zumindest gentoxisch belasteten Wassers vor seinem Eintritt in die sequentielle und/oder simultane Behandlung mit Ozon und schnellen Elektronen einer Vorbehandlung unterworfen wird, indem der genannte Wasser-Strom mit Aktivkohle oder einem anderen Adsorptionsmittel in Kontakt gebracht wird, wobei der genannte Wasser-Strom durch einen bzw. ein mit dem genannten Adsorptionsmittel gebildeten Körper bzw. ein derartiges Filter geführt wird.

4. Verfahren nach einem der Ansprüche 1 bis 3, dadurch gekennzeichnet, daß der Strom des zu behandelnden Wassers im kontinuierlichen Durchfluß, durch das Feld der Strahlung von Elektronen einer Energie im Bereich von etwa 300 bis etwa 4000 keV, bevorzugt im Bereich von 500 bis 1000 keV, geführt wird.

5. Verfahren nach einem der Ansprüche 1 bis 4, dadurch gekennzeichnet, daß ein Strom eines zumindest mit einer oder mehreren gentoxischen Substanz(en) und zusätzlich zumindest mit halogenierten Ethylenen, wie Tri- oder Perchlorethylen belastetes Wasser, bzw. Grundwasser der simultanen und/oder sequentiellen Kombination von Einwirkung des Strahlungsfeldes eines Elektronenbeschleunigers und Beaufschlagung mit Ozon unterworfen wird.

6. Verfahren nach einem der Ansprüche 1 bis 5, dadurch gekennzeichnet, daß der Strom des zumindest mit einer oder mehreren gentoxisch wirksamen Substanz(en) belasteten Wassers in einer gleichmäßigen Schicht mit einer die - der jeweiligen Elektronenstrahlungsenergie entsprechende - maximale Eindringtiefe der Elektronen 1,5-fach bis 3-fach übersteigenden Schichtdicke durch das Strahlungsfeld des Elektronenbeschleunigers geführt wird.

7. Verfahren nach einem der Ansprüche 1 bis 6, dadurch gekennzeichnet, - daß das Ozon in Form von mit demselben beaufschlagtem Wasser ("Starkwasser") und/oder aber im gasförmigen Zustand im Gemisch mit Sauerstoff in den Strom des belastetem Wassers eingebracht wird, wobei im Falle der Ozon-Zugabe im Bereich des Strahlungsfeldes des Elektronenbeschleunigers selbst, eine Zuführung desselben in der Gasphase im gesamten Einwirkungsbereich der Strahlung bevorzugt ist und/oder - daß bei simultaner Einwirkung von Elektronenstrahlung und Ozon das Ozon, bzw. ein mit Ozon angereichertes Wasser ("Starkwasser"), von der der jeweiligen Elektronenstrahlungsquelle abgewandten Seite her in die Schicht des das Strahlungsfeld des Elektronenbeschleunigers durchlaufenden Stroms des zu behandelnden Wassers durch über die Strahlungsquerschnittsfläche gleichmäßig verteilte Zugabestellen eingebracht wird.

8. Verfahren nach Anspruch 7, dadurch gekennzeichnet, daß das Ozon, bzw. ein damit angereichertes Wasser ("Starkwasser"), mit einer Strömungsrichtung quer, insbesondere im wesentlichen senkrecht, zur Strömungsrichtung des das Strahlungsfeld des Elektronenbeschleunigers durchlaufenden Stromes des zu behandelnden Wassers über Zufuhröffnungen bzw. -düsen oder über ein Fritten-, Sieb- oder Netzmaterial in den genannten Strom des zu behandelnden Wassers eingebracht wird.

9. Verfahren nach einem der Ansprüche 1 bis 7, dadurch gekennzeichnet, daß der der eindringenden Elektronenstrahlung zugekehrte Volumsanteil des deren Einwirkungsbereich durchlaufenden Stromes des belasteten Wassers während dessen Durchlaufens mit hohem Durchmischungsgrad mit dessen restlichem Volumsanteil durch Herbeiführung turbulenter Strömung, gemischt wird, wobei die turbulente Strömung vorteilhaft mittels Strömungshemmelementen und/oder mittels des in dasselbe gasförmig oder in Form von mit Ozon angereichertem Wasser ("Starkwasser") eingebrachten Ozons generiert und aufrechterhalten wird.

10. Verfahren nach einem der Ansprüche 1 bis 9, dadurch gekennzeichnet, daß im fertig behandelten Wasser-Strom nach Verlassen des Gesamtprozesses eine Ozon-Konzentration von maximal 0,1 ppm, vorzugsweise von maximal 0,05 ppm, resultiert.

11. Vorrichtung zur Durchführung des Verfahrens nach zumindest einem der Ansprüche 1 bis 10, bei welchem eine simultane Einwirkung von Elektronenstrahlung und Ozon vorgesehen ist, mit mindestens einem Elektronenbeschleuniger (17) und mindestens einer im Bereich von dessen Strahlungskegel angeordneten, jeweils Zu- und Abführungen (15, 18) für fluides Medium aufweisenden und von diesem durchströmbaren Strahlungseinwirkungskammer (15), dadurch gekennzeichnet, daß sie eine mit - zumindest mit einer oder mehreren gentoxischen Substanz(en) belastetem - Wasser in dünner Schicht durchströmbare Durchflußkammer (15) aufweist, die an ihrer der Strahlungs-Quelle (17) abgewandten Seite, Öffnungen (153), Düsen od.dgl. für die Einbringung von mit Ozon angereichertem Wasser und/oder Ozon in gasförmigem Zustand aufweist.

12. Vorrichtung nach Anspruch 11, dadurch gekennzeichnet, daß im wesentlichen im Bereich des Beginns der an die Durchflußkammer (15) anschließenden Abflußleitung (18) oder in einer dort angeordneten Bypass-Leitung ein Sensor (181) zur Ermittlung eines jeweils aktuellen Ozongehaltes angeordnet ist, welcher Sensor (181) über eine Steuerung (182) mit mindestens einem Stellorgan (121, 161) für zumindest ein Zuflußregelorgan (12, 16) mindestens einer Ozon-Zuführungsleitung (11, 111) verbunden ist.

13. Vorrichtung nach Anspruch 11 oder 12, dadurch gekennzeichnet, daß die der Einwirkung der Elektronenstrahlung abgewandte Seite (155) der Durchflußkammer (15) Düsen oder einen Sieb-, Netz- oder Frittenboden für die Zuführung von mit Ozon angereichertem Wasser ("Starkwasser") und/oder Ozon im gasförmigen Zustand aufweist und/oder daß in der Durchflußkammer (15) Einbauten (152) zur Generierung einer turbulenten Strömung angeordnet sind.

14. Vorrichtung nach einem der Ansprüche 11 bis 13, dadurch gekennzeichnet, daß sie eine der Durchflußkammer (15) vorgeschaltete, vom Strom des belasteten Wassers durchströmbare Vorbehandlungs-Anlage (200) mit Aktivkohle oder einem anderen Adsorptionsmittel für eine Adsorption von neben gentoxischen Substanzen im Wasser enthaltenen, adsorptiv bindbaren toxischen Substanzen, wie Perchlorethylen, Trichlorethylen od.dgl., umfaßt.

15. Verwendung eines Verfahrens gemäß mindestens einem der Ansprüche 1 bis 10, in dessen Verlauf ein direkter oder ein nach Durchlaufen einer für eine qualitätsverbessernde Aufbereitung von Wasser vorgesehenen, an sich bekannten Vorbehandlungs-Stufe erhaltener Strom eines belasteten Wassers sequentiell und/oder simultan zumindest einer Beaufschlagung mit Ozon in der Gasphase und/oder in mit Ozon angereichertem Wasser ("Starkwasser") und zumindest einer einmaligen Einwirkung schneller Elektronen durch Führen des genannten Wasser-Stroms durch das Strahlungsfeld eines Elektronenbeschleunigers unterworfen wird, zur Konversion von zumindest mit einer oder mehreren gentoxischen Substanz(en) belastetem Wasser, bevorzugt Grundwasser, in ein Trinkwasser-Qualität aufweisendes Wasser ("Trinkwasser") zur Aufbereitung von zumindest mit einer oder mehreren gentoxischen Substanz(en) belastetem Wasser für Trinkwasserzwecke.

16. Verwendung einer der in den Ansprüchen 11 bis 14 genannten Vorrichtungen in einem Verfahren gemäß einem der Ansprüche 1 bis 10 zur Aufbereitung von zumindest mit einer oder mehreren gentoxischen Substanz(en) belastetem Wasser für Trinkwasserzwecke.
